# EUROPEAN PATENT APPLICATION

(11) **EP 4 575 473 A1**
(43) Date of publication of application: **25.06.2025**
(21) Application number: 23218633.8
(22) Date of filing: 20.12.2023
(51) Int. Cl.: G01N 23/04, G01N 23/046, G06V 10/10

(54) **X-RAY COMPUTED TOMOGRAPHY IMAGING**

(71) Applicant: Excillum AB, 164 40 Kista (SE)
(72) Inventor: DREIER, Till, 164 40 KISTA (SE); HANSSON, Björn, 164 40 Kista (SE); LUNDSTRÖM, Ulf, 164 40 Kista (SE); NILSSON, Daniel, 164 40 Kista (SE)
(74) Representative: AWA Sweden AB

(57) **Abstract**

A method for imaging of an object (109) comprising: providing an X-ray system comprising an X-ray source (101) comprising an electron source (103) arranged to provide an electron beam and a target (107) arranged so that X-ray radiation is generated by interaction between the electron beam and the target, a detector (117) comprising at least a first detector module (119a) and a second detector module (119b) with a gap between the detector modules, directing the electron beam to a first location on the target, acquiring a first image of the object illuminated by the X-ray source and recording the first image by means of the detector, directing the electron beam to a second location on the target, acquiring a second image of the object illuminated by the X-ray source and recording the second image by means of the detector, and combining the first image and the second image to an output image, wherein parts of the object projected onto the gap while acquiring the first image are projected onto the detector modules while acquiring the second image. Corresponding devices and systems are also disclosed.

## Description

### Technical field of the invention

The invention disclosed herein generally relates to methods for X-ray computed tomography (CT) imaging. More particularly, it relates to a method particularly suited for X-ray systems comprising photon counting detectors.

### Background of the invention

X-ray computed tomography is a frequently used method in medical imaging and non-destructive testing. The ever-increasing requirements for improved resolution and decreased inspection time imposed by industrial applications have urged development towards larger detectors with photon counting capabilities. This type of detector is typically comprised of several modules assembled together. The sizes of the modules are typically dictated by production limitations, e.g., Si wafer sizes. Module assembly necessitates finite gaps between the modules, i.e., parts of the detector surface that are not sensitive to X-ray radiation.

There are two major categories of gaps present for detectors comprising modules. Each module may comprise a plurality of sensor chips packed comparatively close to each other. Typically, the gap between the chips on a module is of the order of a few pixels wide. For this case the missing data may be replaced by interpolated values from neighboring pixels (see for example S.I. Inkinen et al. "Calibration method and photon flux influences tiled flat-panel photon counting detector image uniformity in computed tomography." Journal of Instrumentation 15, no. 08 (2020): T08005.). The gaps between modules assembled together are, however, considerably larger, of the order of tens of pixels. In this case interpolation may not give sufficient image quality. The consequence may be that the resulting reconstruction of an inspected object is incomplete, i.e., parts of the object are missing. In principle, this problem may be resolved by obtaining two acquisitions with a slight shift in between and merging the two images into one without missing regions. This method seems to be less favored due to practical issues and increased scan times, see F. Brun et al "Inpainting approaches to fill in detector gaps in phase contrast computed tomography" Measurement Science and Technology 29, no. 1 (2018): 014001, Thus, there is a need for improved systems and methods to obtain complete reconstructions.

### Summary of the invention

It is an object of the present invention to provide methods and systems for generating complete reconstructions from CT data acquired with a detector comprising gaps between detector modules and to do so in a fast and accurate manner.

According to a first example a method is provided comprising obtaining a first set of X-ray images of an object, translating at least one of the X-ray source, the object, or the detector, and obtaining a second set of X-ray images of the object, wherein parts of the object not captured by the first set of images are captured by the second set of images. One particular case of this aspect is where the first set of images and the second set of images comprise one image each. In this case a 2D image of the object may be obtained. For certain detector configurations more than two images may be required to image the entire object, e.g., when the gaps between the detector modules form a square grid.

There are many possible ways to acquire a full CT scan. The most obvious is to provide an X-ray system capable of imaging the entire object on the detector surface for all rotation angles. In this case no translation of the object (other than initial positioning within the field of view) is required. This seemingly straight forward approach may not be preferred since it may require a low magnification to fit the object within the available field of view of the detector. This corresponds to larger effective pixels and lower resolution which may be undesirable. Also, as noted above, in particular for photon counting detectors, projecting the entire object on the detector surface may not be possible. In such cases the object may need to be rotated several times to provide enough data for a complete (or at least substantially complete) reconstruction. One way of doing this may be to acquire images for all rotations for one position of the object, translate the object, and acquire images for all rotations for the new position. This procedure may be repeated until the entire object has been imaged. It is here proposed to speed up this process by using a detector comprising at least two parts separated by a gap. By making the gap substantially equal to an extension of the detector and making a corresponding translation of the object a complete scan of a relatively large object may be obtained from two rotations of the object.

Another way of scanning the object may be to translate and rotate the object simultaneously, a so-called helix scan. The rotation rate and translation speed should be matched so that the entire rotation is covered while the object is translated through the field of view. Furthermore, the rotation rate needs to be selected so that the required angular resolution is obtained, or in other words the angle traversed during the exposure time for one X-ray image should be sufficiently small to enable reconstruction of the object. For a detector with limited height, i.e., extension in the translation direction, the translation velocity may need to be significantly reduced to enable recording of images from all desired angles before the object is translated out of the field of view. By adding another part of the detector, e.g., of equal height as the first part and placed downstream of the first part in the translation direction, the translation speed may be increased and thus the total scanning time reduced. The distance between the two (or more) detector parts may be selected so that each part of the detector images the first and second half of a complete revolution for each cross section respectively.

In a further variation of the invention the rotation rate need not be the same for all rotation angles. Some parts of the object may require a denser sampling to get a sufficiently good reconstruction whereas for other parts of the object a sparser sampling may be enough. By varying the rotation rate, instead of selecting a fixed rotation rate based on the densest sampling required, a shorter total inspection time may be achieved. A varying rotation rate may be realized by elaborate control of a motor arranged to rotate the object or by providing a transmission mechanism comprising e.g. elliptical gear wheels.

To provide for a helical scan in a production environment simultaneous translation and rotation of the objects to be inspected needs to be automated. How this is realized may vary depending on the size and shape of the objects. For cylindrical objects air assisted conveying within a cylindrical tube may be provided. Translation may be facilitated by gravity and bursts of pressurized air may initiate rotation. Provision of an air foil between the objects and the cylindrical tube may provide for low friction and hence a steady and repeatable motion of the objects. Should the motion (translational and/or rotational) not be repeatable and smooth on the required scale, objects may be provided in containers with well-defined fiducial marks to enable accurate determination of the translational and rotational coordinates of the objects for each acquired image. It is also conceivable that fiducial marks may applied directly to the object or that some well-defined feature of the object itself may be used as fiducial mark. Further advantages may be gained by providing succeeding objects closely after one another. This may eliminate or at least reduce dead time otherwise introduced while waiting for an object to enter and exit the field of view. To utilize this advantage more elaborate data processing may be required to associate the acquired image data with the respective individual object.

In a second example an X-ray inspection system is provided comprising an X-ray source, a manipulator arranged to provide for relative rotation and translation of an object, and a detector, wherein the detector comprises at least a first part and a second part separated by a gap. Furthermore, the system comprises a controller arranged to acquire a first set of images for a first object position, acquire a second set of images for a second object position, and use the first and second set of images to make a three-dimensional reconstruction of the object.

An embodiment of the manipulator may comprise a rotation stage to which the object is mounted and a translation stage to which the rotation stage is mounted. Thus, the object may be rotated and translated while the X-ray source and the detector are fixed. Another embodiment of the manipulator may comprise a translation stage to which the object is mounted and an arrangement for rotating the X-ray source and the detector around the object. In this embodiment the object may be moved either stepwise or continuously in one direction while the X-ray source and detector are rotated around the object with their relative orientation kept constant. Another embodiment may comprise a rotation stage to which the object is mounted and a translation stage to which the X-ray source and the detector are mounted. Complete relative rotation of the object may not need to be provided, depending on the characteristics of the object and the requirements on the reconstruction imaging from a limited set of angles may be sufficient. According to theoretical considerations images taken from half a revolution are enough to reconstruct the object provided the incoming X-ray radiation is perfectly collimated. For an X-ray beam with a finite divergence, i.e., the radiation is distributed in a cone, images from half a revolution plus the cone angle is sufficient for a complete reconstruction. To achieve highest possible quality of the reconstruction a full revolution to acquire data from all possible projections may still be required.

Relative rotation of the object is provided around a rotation axis. The rotation axis is preferably arranged not to coincide with a gap between detector modules. In other words, situations where a particular part of the object is projected onto a gap between detector modules for all rotations should be avoided, since no information about that part would be obtained. One way of ensuring that this does not happen may be to arrange the rotation axis outside of the actual object, bearing in mind that all parts of the object are imaged from a required angular range.

The X-ray sources of the present disclosure are of the electron impact type, i.e., X-ray radiation is created by the interaction between a beam of electrons impacting an X-ray target. Advantageously an electro optical arrangement is provided to control the electron beam regarding electron beam spot size and point of impact on the target. The target is typically a metal with a comparatively high atomic number. The target may be in a solid or a liquid state. One example of a liquid target is a liquid metal jet. The target may be a reflection target or a transmission target. An exemplary transmission target may comprise a metal film, e.g., tungsten, provided on a substrate, e.g., made from diamond.

Specifically, the present invention provides a method for X-ray imaging of an object with an X-ray system comprising an X-ray source comprising an electron source arranged to provide an electron beam and a target arranged so that X-ray radiation is generated by interaction between the electron beam and the target, a detector comprising at least a first detector module and a second detector module with a gap between the detector modules, and a sample holder configured to position the object. The method comprises the steps of directing the electron beam to a first location on the target; acquiring a first image of the object by illuminating the object with X-ray radiation from the X-ray source and recording the first image by means of the detector; directing the electron beam to a second location on the target; acquiring a second image of the object by illuminating the object with X-ray radiation from the X-ray source and recording the second image by means of the detector; and combining the first image and the second image to obtain an output image of the object. At least some parts of the object projected onto the gap while acquiring the first image are projected onto the detector modules while acquiring the second image.

In one embodiment, the sample holder is configured to rotate the object, the first image is comprised within a first set of images acquired for a first plurality of rotation angles of the object; the second image is comprised within a second set of images acquired for a second plurality of rotation angles of the object; and the method comprises reconstructing the object based on the first set of images and the second set of images. The gap between the first and second detector module may be substantially equal to a height of the first and the second detector module. The first set of images may be acquired with the electron beam fixedly directed to the first location and the second set images may be acquired with the electron beam fixedly directed to the second location. Alternatively, the electron beam may be moved during the acquisition of the first set of images and the second set of images with a velocity selected so that a sum of detector heights is traversed in the time required to rotate the object one revolution. Further, a rotation rate of the object may be constant while acquiring the first and the second set of images.

The present invention also provides an X-ray system for inspection of an object, the system comprising an X-ray source arranged for emitting X-ray radiation towards the object, wherein the X-ray source comprises an electron source arranged to provide an electron beam, an electro optical arrangement configured to direct the electron beam towards a target wherein X-ray radiation is created by interactions between the electron beam and the target; a sample holder arranged for receiving the object; a detector arranged for detecting X-ray radiation emitted from the X-ray source wherein the detector comprises at least two detector parts placed on a common axis and separated by a gap; a controller arranged for acquiring a first image from the detector, and providing motion of the projection of the object on the detector by deflecting the electron beam by means of the electro optical arrangement.

The X-ray system may also comprise a rotator arranged to provide relative rotational motion between the object and the detector, wherein the controller is arranged for acquiring a set of images from the detector while providing relative rotational motion of the object and the detector by means of the rotator, and providing motion of the projection of the object on the detector by deflecting the electron beam by means of the electro optical arrangement. The rotator may be arranged to rotate the object, or alternatively the rotator may be arranged to rotate the detector and the X-ray source while the relative orientation of the detector and the X-ray source is kept substantially constant. The rotator may comprise at least one non-circular gear wheel. During rotation, the electron beam may be continuously moved, preferably with a velocity selected so that the electron beam moves a distance corresponding to a sum of detector heights in the time required for one revolution of the relative rotational movement of the object and the detector.

For the purpose of this application, the words object and sample may be used interchangeably.

Additionally, variation to the disclosed examples can be understood and effected by the skilled person in practicing the claimed invention, from a study of the drawings, the disclosure, and the appended claims. The mere fact that certain measures are recited in mutually different dependent claims does not indicate that a combination of these measures cannot be advantageously used.

A feature described in relation to one aspect may also be incorporated in other aspects, and the advantage of the feature is applicable to all aspects in which it is incorporated.

Other objectives, features, and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

Preferred embodiments of the invention will now be described in greater detail with reference to the accompanying drawings, on which:
figure 1 is a schematic overview of an X-ray system according to the invention;
figure 2 is a schematic example of an X-ray detector according to the invention;
figures 3a-3d are different examples of relative translations of object, detector, and X-ray source;
figure 4 is a flowchart illustrating a method according to the invention;
figure 5 is an X-ray image of a battery;
figures 6a and 6b are two X-ray images of the same object with the electron beam spot directed to different locations on the target.

Unless otherwise indicated, the drawings are schematic and not to scale.

### Detailed description of embodiments

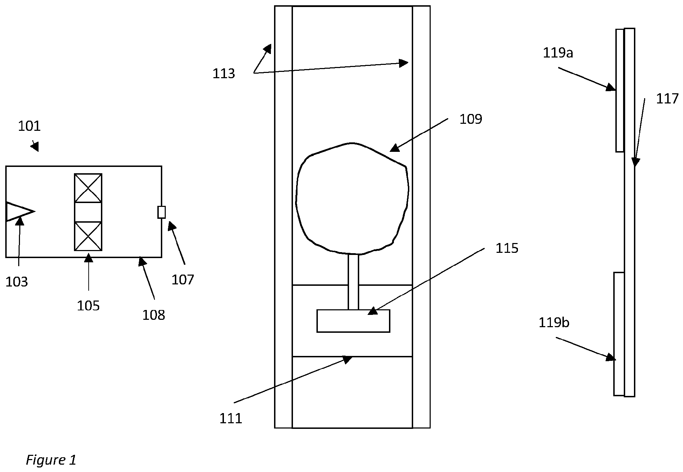

Figure 1 is a schematic illustration of an X-ray system according to the invention wherein an X-ray source 101 illuminates an object 109 to produce an X-ray image on the detector 117. The X-ray source comprises an electron source 103 arranged to generate an electron beam that is directed and focused by means of an electron optical assembly 105 on a target 107. The target in this example is a transmission type target configured so that X-ray radiation propagating in the same direction as the electron beam is created by interaction between the electron beam and the target. In other words, the target is functioning as an X-ray window so that X-ray radiation is emitted from enclosure 108. In other examples a reflection type target may be used, i.e., a configuration wherein the X-ray radiation is emitted at an angle towards the electron beam. In this latter case a separate X-ray window will be provided. The emitted X-ray radiation illuminates an object 109 that may be translated by translator 111 arranged on a pair of rails 113. The object may furthermore be rotated by means of rotator 115 attached to translator 111. The object may either be rotated while the translator is at a fixed position or rotation and translation may be performed simultaneously. X-ray radiation not absorbed or scattered by the object is detected by X-ray detector 117. In this example the detector comprises two parts 119a and 119b separated by a gap. X-ray radiation impacting on either of the two parts 119a and 119b is detected whereas radiation impacting on the gap is not detected.

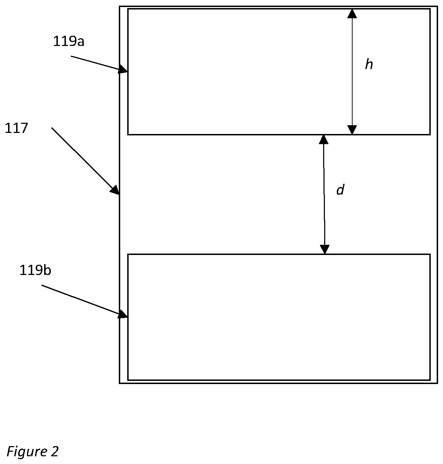

Figure 2 shows a front view of detector 117 with the two parts 119a and 119b of height *h* separated by a gap of height *d.* The gap height *d* is suitably selected so that the entire object may be imaged with the desired accuracy for as few rotations of the object as possible. The gap *d* may be substantially equal to the height *h.* In this case an object height corresponding to four detector heights *h* may be completely scanned with two rotations of the object with one translation performed between the rotations. For embodiments wherein the object is simultaneously rotated and translated the gap may be equal to the detector height *h* for cases wherein an odd number of detector parts are provided, whereas the gap may be twice the detector height for cases wherein an even number of detector parts are provided.

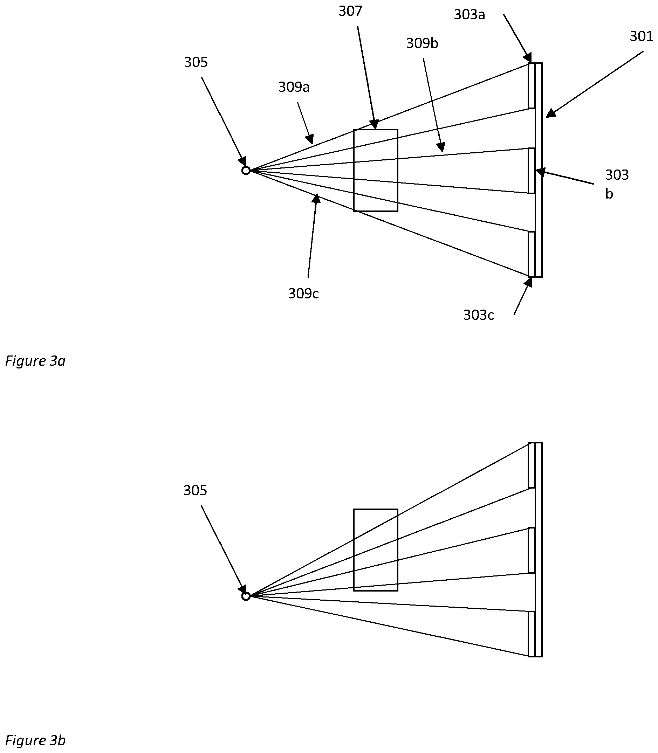

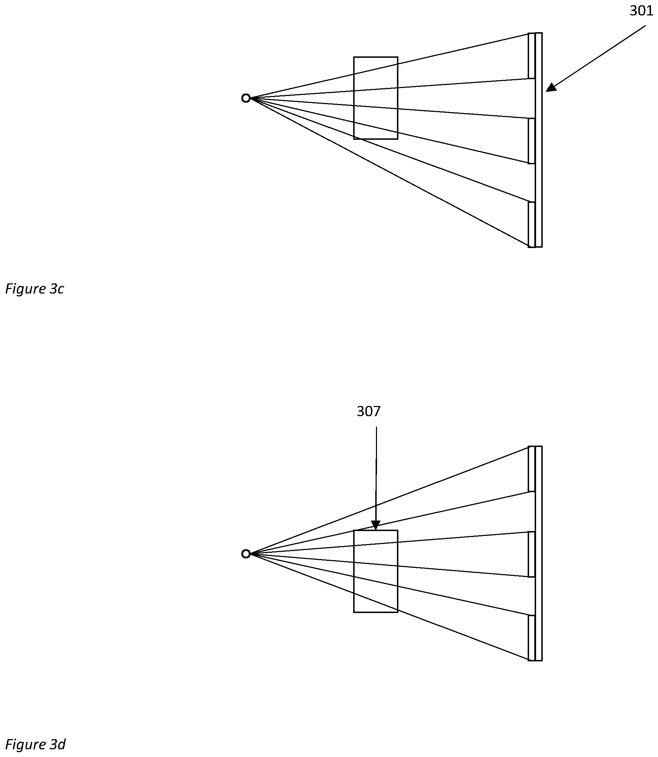

Figure 3a illustrates an example wherein detector 301 comprises three parts 303a, 303b, 303c. An X-ray source 305 shown as a point like object emits X-ray radiation illuminating object 307. X-ray radiation within the cones 309a, 309b, and 309c, can reach the respective detector parts 303a, 303b, and 303c respectively. In figure 3b the X-ray source 305 has been translated so that parts of the object not falling within the cones 309a, 309b, or 309c in figure 3a may be imaged on the detector. Note that translation of the source may be accomplished by moving the entire source or by deflecting the electron beam in figure 3c the detector 301 has been translated with the purpose of detecting X-ray radiation not impacting on the detector parts in figure 3a. In figure 3d the object 307 has been translated in relation to the X-ray source and the detector so that parts of the object not projected on to the detector parts in figure 3a are imaged. This may be realized either by translating the object or by translating the X-ray source and the detector as one unit.

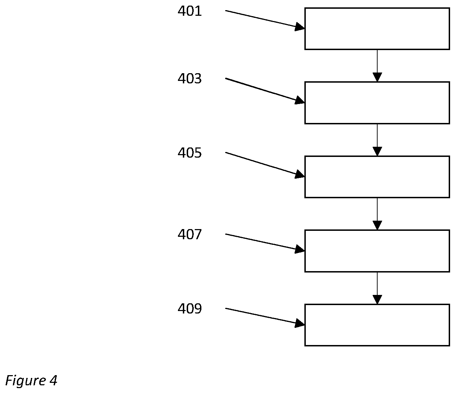

Figure 4 is flowchart illustrating a method according to the invention comprising providing 401 an X-ray system comprising an X-ray source, a detector comprising at least a first detector module and a second detector module with a gap between the first and the second detector module, and a sample holder comprising means for rotating the object. Acquiring 403 a first set of images by rotating the object illuminated by the X-ray source and recording images by means of the detector for a first plurality of rotation angles. Translating 405 at least one of the X-ray source, the object, and the detector in relation to each other, preferably by moving the electron beam spot, so that parts of the object not imaged in the first set of images are imaged by acquiring 407 a second set of images by rotating the object illuminated by the X-ray source and recording images by means of the detector for a second plurality of rotation angles. Reconstructing 409 the object based on the first set of images and the second set of images. Note that the first set and second set of images may comprise one image each acquired for one rotation angle, in which case the rotation is angle is preferably the same for the first set of images and the second set of images.

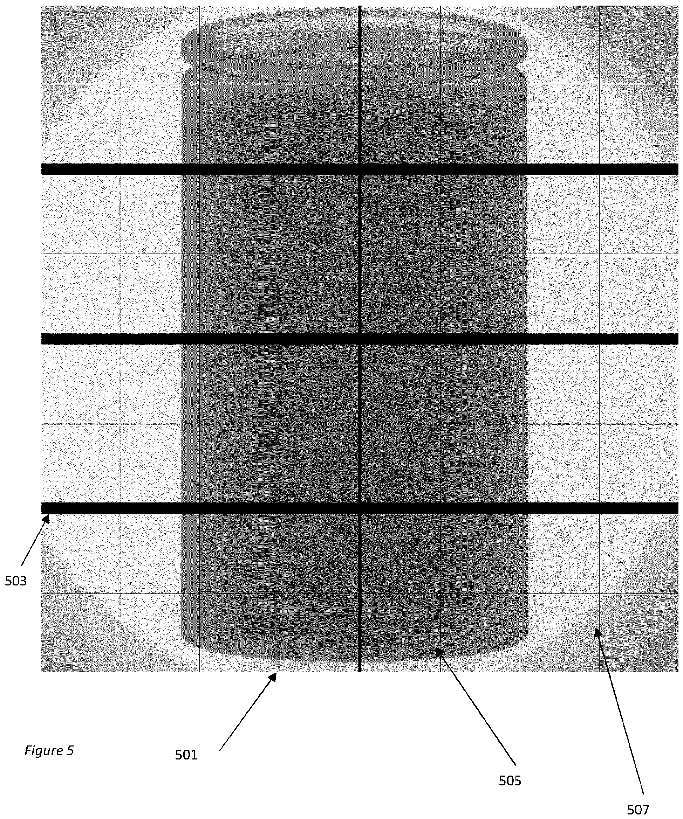

Figure 5 shows an exemplary X-ray image acquired with a photon counting detector comprising 8 detector modules wherein each module comprises 8 sensor chips. The gaps between sensor chips show up as thin black line 501 in the image. The gaps between detector modules show up as thicker black lines 503. The imaged object, in this case a commercially available lithium-ion battery, shows up as a dark grey semitransparent feature 505. The grey circular arcs 507 that are present in the corner of the image represent a beam limiting aperture placed between the X-ray source and the object. The aperture may be comprised as an exit window designed to allow X-ray radiation to be emitted from the X-ray source while preserving a reduced pressure or vacuum within an enclosure around the X-ray source. In this case the distances between the X-ray source, the object, and the detector have been selected so that the entire object is illuminated and the image fits within the detector area. Many possible choices for these distances are conceivable, in general designs with large magnification and where a large fraction of the emitted X-ray radiation reaches the detector are preferred. The choice of distances may impact the applicability of different alternative ways to compensate for the gaps between detector modules. In particular, if the electron beam spot is moved so that parts of the object previously imaged on the gaps are instead imaged on an active sensor surface (see Figure 3a and Figure 3b) the image of an aperture between the source and the object will also move, potentially to such an extent that parts of the image of the object is obscured.

In embodiments where helical scans are performed the translational velocity is selected to match the rotation rate required to get the desired angular resolution. In other words, the time needed to get the desired number of exposures should be matched by the time it takes to translate the object a distance corresponding to the sum of the heights of the detector parts, i.e. if there are two detector parts the translation velocity should be selected so that the object is displaced a distance corresponding to one detector height in the time it takes to rotate half a revolution. The distance is readily calculated from the height by considering the magnification of the object on the detector. If the distance from the X-ray source to the detector is denoted *SDD* and the distance from the X-ray source to the object is denoted *SOD* the magnification is *SDD*/*SOD,* thus the distance the object is translated should be scaled with this ratio to achieve some particular translation of the image on the detector.

In embodiments of the present invention no mechanical translational movement is required, instead the electron beam is deflected to impact different locations on the target, thus the X-ray spot will move in relation to the object and the detector. To displace the projection a certain distance the electron beam should be moved a fraction of this distance calculated from the magnification. Keeping with the notation from above the electron beam motion should be scaled a factor 1/(*SDD*/*SOD* - 1) from the desired projection movement. As an example, a first set of images may be acquired with the electron beam directed to a first location of the target while the object and an assembly of X-ray source and detector are rotated relative to each other over some angular range (e.g. one revolution). The electron beam may then be directed to a second location and a second set of images acquired. The distance between the first location and the second location may correspond to the gap between the detector parts, i.e., if the gap is denoted by *h* the distance between the locations may be calculated as *h*/(*SDD*/*SOD-*1). In another embodiment the electron beam may be continuously moved while the object rotates.

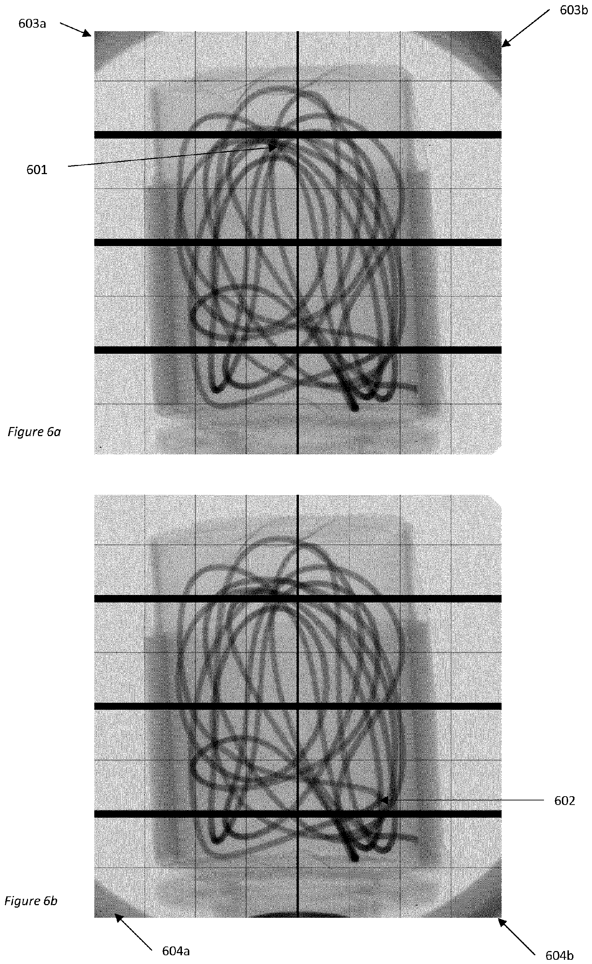

Figures 6a and 6b illustrate the concept of moving the electron beam spot on the target to compensate for detector gaps. An object comprising a coiled copper wire inside a plastic cylinder mounted in front of the photon counting detector used for obtaining the image in Figure 5 was imaged a plurality of times with the electron beam spot positioned at different locations along the vertical axis in the image plane. As evident, features not visible in Figure 6a appear in Figure 6b and vice-versa, for example the dark feature marked 601 in Figure 6a is not seen in Figure 6b, and the feature marked 602 in Figure 6b is not seen in Figure 6a. This method may have a limited range of applicability at least partly dictated by an aperture limiting a cone angle of the X-ray radiation being emitted from the X-ray source. This can be seen to some extent in Figures 6a and 6b where the upper and lower part of the detector surface respectively is partly obscured by X-ray images of the aperture. These images are seen as partly circular features 603a, 603b for the upper part, and 604a, 604b for the lower part. In this example only one projection has been illustrated, similar images may be acquired for any desired number of projections for different angular orientations of the object. With a data set obtained in this way a three-dimensional reconstruction of the object may be calculated wherein data for all parts of the object are available provided that the rotation axis does not coincide with one of the detector gaps.

Particular features of different types of X-ray sources may impose constraints on applicable set ups. If the source is a liquid metal jet X-ray source there may be a comparatively large range of electron beam spot movement available in a direction along the jet whereas the available range perpendicular to the jet may be limited. In this case it may be advantageous to arrange the widest detector gaps so that the electron beam spot may be moved so that the X-ray radiation on the object is moved across these gaps. For a source comprising a target without a clear preferred direction for electron beam spot movement it may be advantageous to move the electron beam spot in a direction so that all object features obscured by target gaps in a first set of images are revealed in a second set of images. For the detector used for the images in figures 5, 6a, and 6b the electron beam spot may be moved in a diagonal direction to accomplish this.

Itemized exemplary embodiments:
1. A method for three-dimensional imaging of an object comprising:
   providing an X-ray system comprising an X-ray source, a detector comprising at least a first detector module of and a second detector module with a gap between the detector modules, and a sample holder comprising means for rotating the object;
   acquiring a first set of images by rotating the object illuminated by the X-ray source and recording images by means of the detector for a first plurality of rotation angles;
   translating at least one of the X-ray source, the object, and the detector in relation to each other;
   acquiring a second set of images by rotating the object illuminated by the X-ray source and recording images by means of the detector for a second plurality of rotation angles; and
   reconstructing the object based on the first set of images and the second set of images.
2. The method according to item 1 wherein the step of translating is performed so that parts of the object not imaged for the first set of images are imaged for the second set of images.
3. The method according to item 1 or 2 wherein the gap between the first and second detector module is substantially equal to a height of first and second detector module.
4. The method according to any one of items 1-3 wherein the first set of images are acquired with the object at a first fixed translational position and the second set images are acquired with the object as a second fixed translational position.
5. The method according to any one of items 1-3 wherein the object is translated during the acquisition of the first set of images and the second set of images with a velocity selected so that a sum of detector heights is traversed in the time required to rotate the object one revolution.
6. The method according to any one of items 1-5 wherein a rotation rate is constant while acquiring the first and second set of images.
7. An X-ray system for inspection of an object comprising:
   an X-ray source arranged for emitting X-ray radiation towards the object;
   a sample holder comprising a translator arranged for translating the object and a rotator arranged for rotating the object;
   a detector arranged for detecting X-ray radiation emitted from the X-ray source wherein the detector comprises at least two detector parts separated by a gap; and
   a controller arranged for acquiring a set of images from the detector while rotating the object and acquiring a second set of images from the detector while rotating the object and translating the object in a direction substantially perpendicular to a longitudinal direction of the at least two detector parts.
8. The X-ray system according to item 7 wherein the rotator comprises at least one non-circular gear wheel.
9. An X-ray system for inspection of a cylindrical object comprising:
   an X-ray source arranged for emitting X-ray radiation towards an inspection region;
   a tube arranged to convey the object trough the inspection region;
   an air nozzle arranged to provide air flow for rotating the object inside the tube; and
   a detector arranged for detecting X-ray radiation emitted from the X-ray source.
10. An X-ray system for inspection of an object, comprising:
   an X-ray source arranged for emitting X-ray radiation towards the object;
   a sample holder arranged for receiving the object;
   a detector arranged for detecting X-ray radiation emitted from the X-ray source wherein the detector comprises at least two detector parts placed on a common axis and separated by a gap;
   a rotator arranged to provide relative rotational motion between the object and the detector;
   a manipulator arranged to provide motion of a projection of the object on the detector in a direction substantially parallel to the common axis;
   a controller arranged for acquiring a set of images from the detector while providing relative rotational motion of the object and the detector by means of the rotator, and providing motion of the projection of the object on the detector by means of the manipulator.
11. The X-ray system according to item 10 wherein the rotator is arranged to rotate the object.
12. The X-ray system according to item 10 wherein the rotator is arranged to rotate the detector and the X-ray source while the relative orientation of the detector and the X-ray source is kept constant.
13. The X-ray system according to any one of items 10-12 wherein the manipulator is arranged to move the object.
14. The X-ray system according to any one of items 10-12 wherein the manipulator is arranged to move the detector.
15. The X-ray system according to any one of items 10-12 wherein the manipulator is arranged to move the X-ray source.
16. The X-ray system according to any one of items 10-12 wherein the manipulator is arranged to move the X-ray source and the detector while the relative orientation of the detector and the X-ray source is kept constant.

Other variations to the disclosed embodiments can be understood and effected by those skilled in the art in practicing the claimed invention, from a study of the drawings, the disclosure, and the appended claims. Any reference signs in the claims should not be construed as limiting the scope.

## Claims

1. A method for X-ray imaging of an object comprising:
providing an X-ray system comprising an X-ray source comprising an electron source arranged to provide an electron beam and a target arranged so that X-ray radiation is generated by interaction between the electron beam and the target, a detector comprising at least a first detector module and a second detector module with a gap between the detector modules, and a sample holder configured to position the object;
directing the electron beam to a first location on the target;
acquiring a first image of the object by illuminating the object with X-ray radiation from the X-ray source and recording the first image by means of the detector;
directing the electron beam to a second location on the target;
acquiring a second image of the object by illuminating the object with X-ray radiation from the X-ray source and recording the second image by means of the detector; and
combining the first image and the second image to obtain an output image of the object;
wherein at least some parts of the object projected onto the gap while acquiring the first image are projected onto the detector modules while acquiring the second image.

2. The method according to claim 1 wherein:
wherein the sample holder comprises means for rotating the object;
the first image is comprised within a first set of images acquired for a first plurality of rotation angles of the object;
the second image is comprised within a second set of images acquired for a second plurality of rotation angles of the object; and the method further comprises:
reconstructing the object based on the first set of images and the second set of images.

3. The method according to claim 1 or 2 wherein the gap between the first and second detector module is substantially equal to a height of the first and the second detector module.

4. The method according to claims 2 or 3 wherein the first set of images are acquired with the electron beam fixedly directed to the first location and the second set images are acquired with the electron beam fixedly directed to the second location.

5. The method according to claims 2 or 3 wherein the electron beam is moved during the acquisition of the first set of images and the second set of images with a velocity selected so that a sum of detector heights is traversed in the time required to rotate the object one revolution.

6. The method according to any one of claims 2-5 wherein a rotation rate of the object is constant while acquiring the first and the second set of images.

7. An X-ray system for inspection of an object, comprising:
an X-ray source arranged for emitting X-ray radiation towards the object, wherein the X-ray source comprises an electron source arranged to provide an electron beam, an electro optical arrangement configured to direct the electron beam towards a target wherein X-ray radiation is created by interactions between the electron beam and the target;
a sample holder arranged for receiving the object;
a detector arranged for detecting X-ray radiation emitted from the X-ray source wherein the detector comprises at least two detector parts placed on a common axis and separated by a gap;
a controller arranged for acquiring a first image from the detector, and providing motion of the projection of the object on the detector by deflecting the electron beam by means of the electro optical arrangement.

8. The X-ray system of claim 7 comprising
a rotator arranged to provide relative rotational motion between the object and the detector, wherein the controller is arranged for acquiring a set of images from the detector while providing relative rotational motion of the object and the detector by means of the rotator, and providing motion of the projection of the object on the detector by deflecting the electron beam by means of the electro optical arrangement.

9. The X-ray system according to claim 8 wherein the rotator is arranged to rotate the object.

10. The X-ray system according to claim 8 wherein the rotator is arranged to rotate the detector and the X-ray source, while the relative orientation of the detector and the X-ray source is kept substantially constant.

11. The X-ray system according to any one of claims 8-10 wherein the rotator comprises at least one non-circular gear wheel.

12. The X-ray system according to any one of claims 8-11 wherein the electron beam is continuously moved during rotation.

13. The X-ray system according to claim 12 wherein the electron beam is moved with a velocity selected so that the electron beam moves a distance corresponding to a sum of detector heights in the time required for one revolution of the relative rotational movement of the object and the detector.
